# EUROPEAN PATENT APPLICATION

(11) **EP 4 775 355 A1**
(43) Date of publication of application: **15.07.2026**
(21) Application number: 25151060.8
(22) Date of filing: 09.01.2025
(51) Int. Cl.: B25H 3/04, A47F 5/08

(54) **A HANGER ACCESSORY AND HANGER SYSTEM**

(71) Applicant: Stanley Black & Decker MEA FZE, Dubai (AE)
(72) Inventor: LIU, Te-Sheng, 408 Taichung City (TW); CHANG, Chia-Wei, 40757 Taichung City (TW); LIU, Chun-Chiang, 40757 Taichung City (TW)
(74) Representative: Gill Jennings & Every LLP

(57) **Abstract**

A hanger accessory mountable on a rail and a pegboard comprises
an accessory body and a rail bracket connected to the accessory body and mountable on the rail on a first rail portion. The hanger accessory also comprises at least one hook connected to the accessory body and engageable with a first pegboard hole of the pegboard. A locking mechanism is mounted on the accessory body, wherein the locking mechanism has a rail locking mechanism arranged to selectively engage to a second rail portion of the rail and a pegboard locking mechanism arranged to selectively engage one or more second pegboard holes of the pegboard. The hanger accessory is configurable between a rail hanger configuration wherein the rail bracket and the rail locking mechanism are engageable on the rail and a pegboard hanger configuration wherein the at least one hook and the pegboard locking mechanism are engageable on the pegboard.

## Description

### Field

The present disclosure relates to hanger accessories and hanger systems.

### Background

It is often desirable to organise objects in restricted spaces such as sheds, workshops and utility rooms. One such solution to increase the amount of available storage space is to utilise vertical surfaces such as walls.

One such known system is a hanger system whereby a rail is fixed to a wall and a hanger accessory can be mounted on the rail system. Objects such as tools, bicycles etc. can be stored in a vertical orientation or suspended from a hanger system.

The rail allows for the position of the hanger accessory to be adjusted without moving the rail with respect to the wall. Other hanger systems may comprise a pegboard with a plurality of holes arranged to receive hooks of a hanger accessory. Again, objects such as tools can be stored in a vertical orientation or suspended from a hanger system. One problem with these arrangements is that the position of the hanger accessory can accidentally be moved out of position, or detach from the hanger system.

Another problem is that the rail hanger system and the pegboard hanger system work in different ways and require different components. However, a user may wish to have both a rail hanger system and a pegboard hanger system in the same workspace. In this case, the user will need to have two sets of hanger accessories for both the pegboard and the rail. This limits the versatility and the number of different configurations of hanger accessories for the user.

### Summary

Examples of the present disclosure aim to address the aforementioned problems.

According to an aspect of the present disclosure there is a hanger accessory mountable on a rail and a pegboard comprising: an accessory body; a rail bracket connected to the accessory body and mountable on the rail on a first rail portion; at least one hook connected to the accessory body and engageable with a first pegboard hole of the pegboard: and a locking mechanism mounted on the accessory body, wherein the locking mechanism has a rail locking mechanism arranged to selectively engage to a second rail portion of the rail and a pegboard locking mechanism arranged to selectively engage one or more second pegboard holes of the pegboard; wherein the hanger accessory is configurable between a rail hanger configuration wherein the rail bracket and the rail locking mechanism are engageable on the rail and a pegboard hanger configuration wherein the at least one hook and the pegboard locking mechanism are engageable on the pegboard.

Optionally, the locking mechanism comprises a locking mechanism actuator arranged to actuate the locking mechanism.

Optionally, the locking mechanism actuator is operatively coupled to the rail locking mechanism and the pegboard locking mechanism.

Optionally, the locking mechanism actuator actuates both the rail locking mechanism and the pegboard locking mechanism at the same time.

Optionally, the pegboard locking mechanism comprises at least one locking hook wherein the at least one locking hook is moveable between a locked position and an unlocked position.

Optionally, the at least one locking hook is mounted on a moveable bracket having at least one cam surface and the locking mechanism actuator comprises at least one cam arm engageable with the at least one cam surface arranged to move the moveable bracket between the locked position and the unlocked position.

Optionally, the moveable bracket comprises at least one bracket slot wherein at least one retaining rivet fixed to the accessory body is positioned within the at least one bracket slot.

Optionally, the at least one locking hook is a first locking hook and a second locking hook which are moveable between the locked position and the unlocked position.

Optionally, the locking mechanism comprises a spring connected to the at least one locking hook such that the at least one locking hook is biased to the unlocked position or the locked position.

Optionally, the at least one hook is mounted to a pivotable hook bracket moveable between an extended position and a stowed position.

Optionally, when the pivotable hook bracket is in the stowed position, the pivotable hook bracket is positioned between the rail bracket and the rail locking mechanism such that the pivotable hook bracket is receivable in a rail central recess between the first rail portion and the second rail portion.

Optionally, the rail bracket comprises at least one hook slot for receiving the at least one hook when the pivotable hook bracket moves between the extended position and the stowed position.

Optionally, the rail locking mechanism comprises a rotatable locking arm moveable between a locked position wherein the locking arm engages the second rail portion and an unlocked position wherein the locking arm disengages from the second rail portion.

Optionally, the rotatable locking arm protrudes a first distance from the accessory body and the pegboard locking mechanism protrudes a second distance from the accessory body and the first distance is less than the second distance.

Optionally, at least a portion of the pegboard locking mechanism is receivable in a recess in the rail when the hanger accessory is in the rail hanger configuration.

In a second aspect there is provided a hanger system comprising: a hanger accessory according to the first aspect; and a rail and / or a pegboard.

### Brief Description of the Drawings

Various other aspects and further examples are also described in the following detailed description and in the attached claims with reference to the accompanying drawings, in which:
Figure 1a shows a perspective view of a hanger accessory mounted on a pegboard according to some examples;
Figure 1b shows a reverse perspective view of a hanger accessory according to some examples;
Figures 2a and 2b respectively show a side view of a hanger accessory in a pegboard hanger configuration and rail hanger configuration according to some examples;
Figures 3a and 3b respectively show a back view of a hanger accessory in an unlocked position and a locked position respectively according to some examples;
Figures 4a and 4b respectively show a front view of a locking mechanism for a hanger accessory in an unlocked position and a locked position according to some examples;
Figure 5 shows a perspective view of a locking mechanism for a hanger accessory according to some examples;
Figure 6 shows a perspective view of a hanger accessory mounted on a rail according to some examples;
Figure 7 shows a perspective view of some components of the hanger accessory mounted on a rail according to some examples;
Figures 8a and 8b respectively show a side view of a hanger accessory in a rail hanger configuration in an unlocked position and a locked position according to some examples;
Figures 9a and 9b respectively show a back view of another hanger accessory in a pegboard hanger configuration in an unlocked position and a locked position according to some examples; and
Figures 10a and 10b respectively show a side view of another hanger accessory in a pegboard hanger configuration and a rail hanger configuration according to some examples.

### Detailed Description

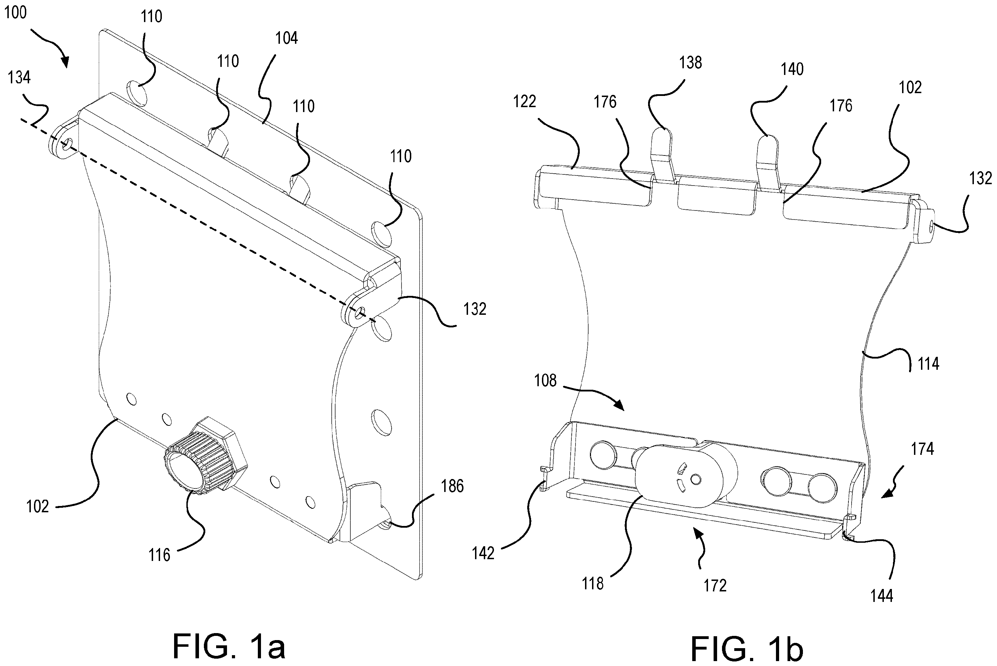

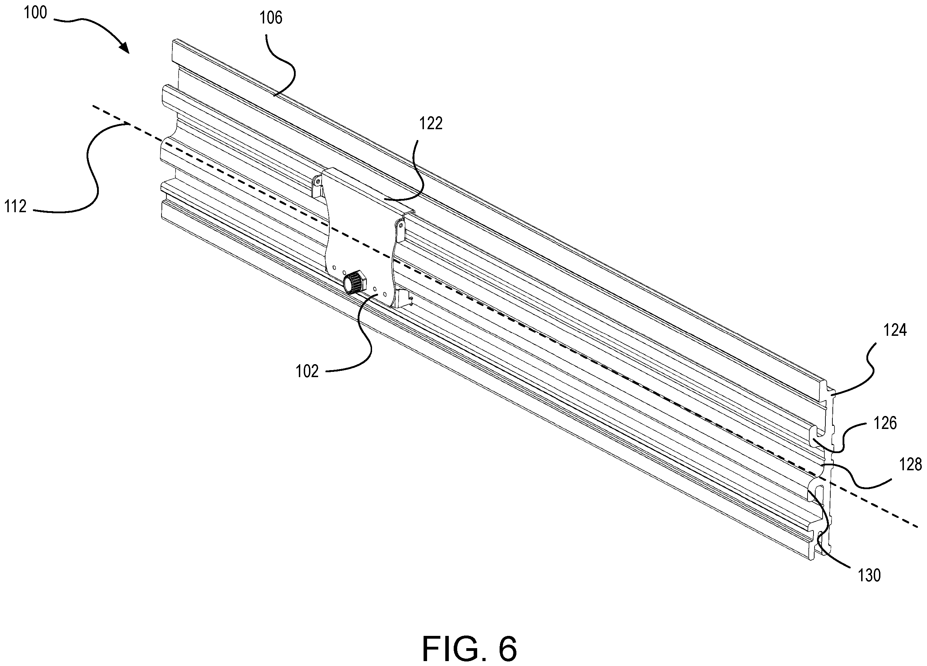

Figure 1a shows a perspective view of a hanger system 102 having a hanger accessory 100 and a pegboard 104. Figure 1b shows a reverse perspective view of the hanger accessory 100 without the pegboard 104. The hanger system 102 as shown in figures 1a and 1b can also be mounted on a rail 106 as shown in figure 6. As shown in figure 1a the hanger accessory 100 is secured to the pegboard 104 using a plurality of pegboard holes 110.

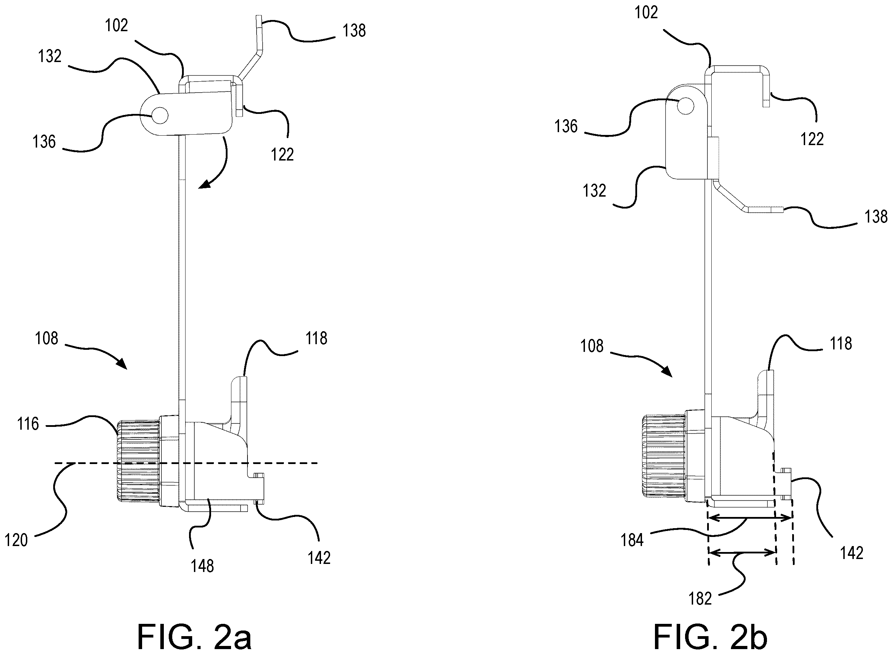

Some of the pegboard holes 110 have been labelled in figure 1a, however for the purposes of clarity not all of the pegboard holes 110 have been labelled in figure 1a. As shown in figure 2 the hanger accessory 100 comprises an accessory body 114. The accessory body 114 is planar and extends in a plane parallel to the pegboard 104 when mounted thereto.

A locking mechanism 108 is mounted to the accessory body 114. The locking mechanism 108 comprises a pegboard locking mechanism 174 and a rail locking mechanism 172. In this way the locking mechanism 108 is arranged to selectively engage the hanger accessory 100 with a pegboard 104 and a rail 106. This means that the hanger accessory 100 is more versatile and provides the user with more configuration options since the hanger accessory 100 can be used with either a pegboard 104 or a rail 106.

The locking mechanism 108 and the pegboard locking mechanism 174 and the rail locking mechanism 172 will be discussed in more detail with the figures below.

Turning to figures 2a and 2b, the hanger accessory 100 will be discussed in more detail. Figure 2a shows a side view of the hanger accessory 100 in a pegboard hanger configuration and figure 2b shows the hanger accessory 100 in a rail hanger configuration.

Accordingly, the hanger accessory 100 is configurable between a pegboard hanger configuration and a rail hanger configuration. This means that the user can reconfigure the hanger accessory 100 as required for use with either a pegboard 104 or a rail 106.

In order to configure the hanger accessory 100 between the pegboard hanger configuration and the rail hanger configuration, the user may have to manipulate one or more components of the hanger accessory 100. For example, the user may have to fold, pivot or slide one or more components of the hanger accessory 100 so that the hanger accessory 100 is mountable on the pegboard 104 or the rail 106. Figure 2a shows the hanger accessory 100 ready for use with the pegboard 104. Figure 2b shows a hanger accessory 100 ready for use with the rail 106.

When the hanger accessory 100 is in the pegboard hanger configuration, the hanger accessory 100 is mountable to a pegboard 104. When the hanger accessory 100 is in the rail hanger configuration, the hanger accessory 100 is mountable to a rail 106. As mentioned above, in some examples, one or more components of the hanger accessory 100 are adjusted in order to configure the hanger accessory 100 between the pegboard hanger configuration and the rail hanger configuration. In some alternative examples, the hanger accessory 100 is in both the pegboard hanger configuration and the rail hanger configuration at the same time. This means that no adjustment is needed of the hanger accessory 100 before the mounting the hanger accessory 100 on a pegboard 104 after being mounted on a rail 106 and vice versa.

When the hanger accessory 100 is configured in the pegboard hanger configuration, a plurality of hooks is used to engage with a plurality of pegboard holes 110. As shown in figure 2a, a first bracket hook 138 extends from an upper portion of the hanger accessory 100. Figure 1b shows the first bracket hook 138 together with a second bracket hook 140 extending upwardly from the hook bracket 132. Figure 1a shows the first bracket hook 138 and the second bracket hook 140 inserted through a plurality of first pegboard holes 110 e.g. two first pegboard holes 110.

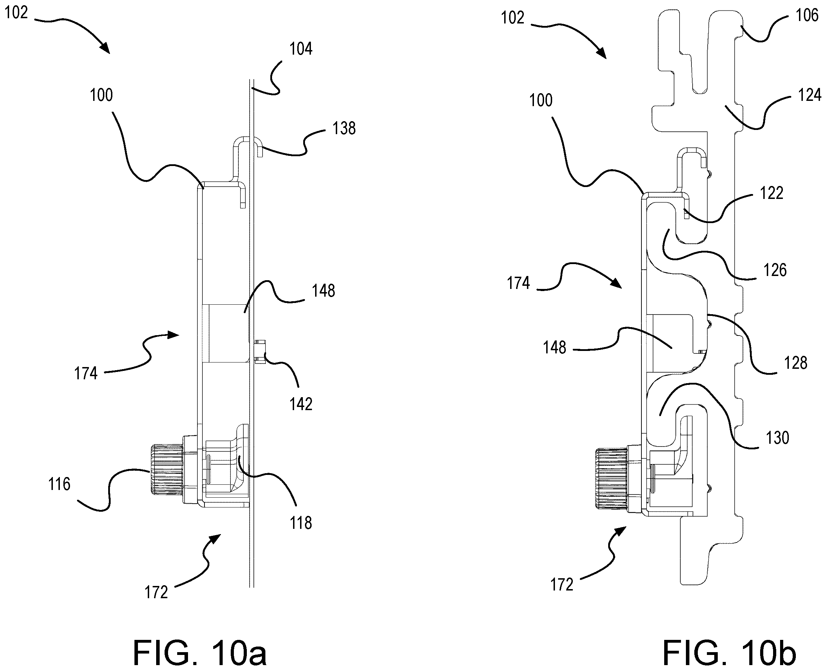

The hook bracket 132 is a portion of the hanger accessory 100 connected to the accessory body 114. The hook bracket 132, as shown in figures 1a, 1b, 2a, 2b, is pivotally mounted to the accessory body 114. However, in other examples, the hook bracket 132 is fixed with respect to the accessory body 114, e.g. as shown in figures 10a and 10b below.

The locking mechanism 108, and specifically the pegboard locking mechanism 174, comprises a first locking hook 142 and a second locking hook 144 to selectively engage second pegboard holes 186. One of the second pegboard holes 186 is shown in Figure 1a. The pegboard locking mechanism 174 can selectively engage any suitable number of second pegboard holes 186 e.g. a single second pegboard hole 186, two second pegboard holes 186 etc.

As mentioned above, the hook bracket 132 is pivotable between different positions. Specifically, as shown in figure 2a, the hook bracket 132 is in an extended position. When the hook bracket 132 is in the extended position, the first bracket hook 138 and the second bracket hook 140 extend upwardly from the hanging accessory 100. Indeed, as seen in figure 2a, the first bracket hook 138 and the second bracket hook 140 project beyond a rail bracket 122. The rail bracket 122 will be discussed in more detail below.

Turning to figure 2b, the hook bracket 132 has been pivoted about pivot 136 to a stowed position. When the hook bracket 132 is in the stowed position, the first bracket hook 138 and the second bracket hook 140 are positioned in the middle of the accessory body 114. That is, the first bracket hook 138 and the second bracket hook 140 are positioned between the rail bracket 122 and the locking mechanism 108.

The hook bracket 132 is pivotable about a pivot axis 134 as shown in figure 1a. In order to move the hook bracket 132 between the extended position and the stowed position, the user pushes the hook bracket 132 towards the accessory body 114 (as shown by the arrow in Figure 2a) when the hanger accessory 100 is not engaged in the pegboard 104.

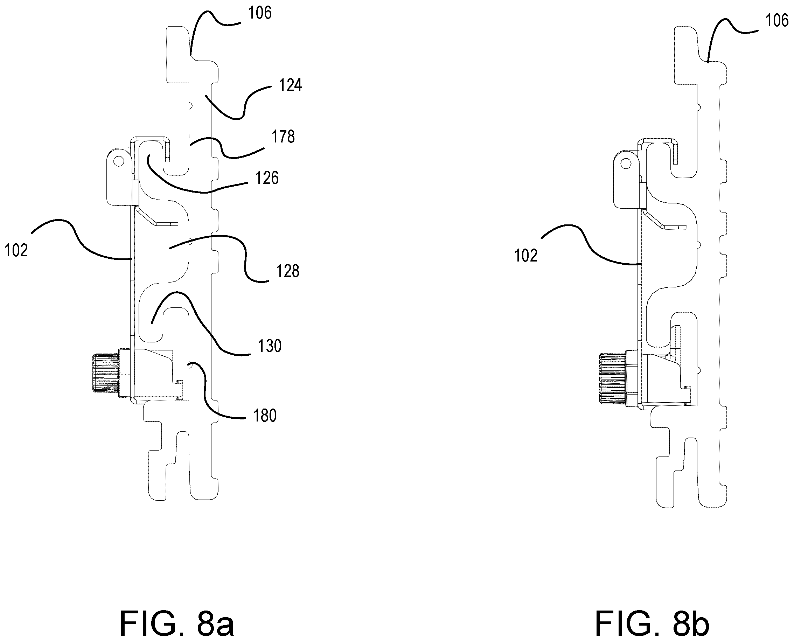

When the hook bracket 132 is in the stowed position, the first bracket hook 138 and the second bracket hook 140 are positioned such that the first bracket hook 138 and the second bracket hook 140 are receivable within a rail central recess 128 as shown in figure 8. This means that the hook bracket 132 does not interfere when the hanger accessory 100 is mounted to the rail 106.

The locking mechanism 108 is also shown in figures 2a and 2b and will now be discussed in more detail. The locking mechanism 108 comprises a locking mechanism actuator 116. The locking mechanism actuator 116 in some examples is a rotatable knob. However, the locking mechanism actuator 116 can be any suitable actuator (e.g. button, lever etc) operatively connected to the locking mechanism 108. The locking mechanism actuator 116 is rotatable about a locking arm rotation axis 120.

Accordingly, the locking mechanism actuator 116 is arranged to move the locking mechanism 108 between an unlocked position and a locked position. As shown in figures 2a and 2b, the locking mechanism actuator 116 is operatively coupled to both the rail locking mechanism 172 and the pegboard locking mechanism 174. However, in some other examples, e.g. as shown in figure 10a and 10b, the locking mechanism actuator 116 may only be operatively coupled to one of the pegboard locking mechanism 174 and the rail locking mechanism 172. Indeed, as shown in figures 10a and 10b, the locking mechanism actuator 116 is only operatively coupled to the rail locking mechanism 172.

When the locking mechanism 108 as shown in figures 2a and 2b is in the locked position, both the rail locking mechanism 172 and the pegboard locking mechanism 174 are in the locked position. This means that when the hanger accessory 100 is engaged to the rail 106, the rail locking mechanism 172 prevents the hanger accessory 100 from being removed from the rail 106. Likewise, when the pegboard locking mechanism 174 is in the locked position, the pegboard locking mechanism 174 prevents the hanger accessory 100 from being removed from the pegboard 104. When the rail locking mechanism 172 and the pegboard locking mechanism 174 are in the unlocked position, the hanger accessory 100 can be removed respectively from the rail 106 and the pegboard 104.

The locking mechanism actuator 116 is operatively coupled to a locking arm 118. The locking arm 118 as shown in figure 2a is in a locked position.

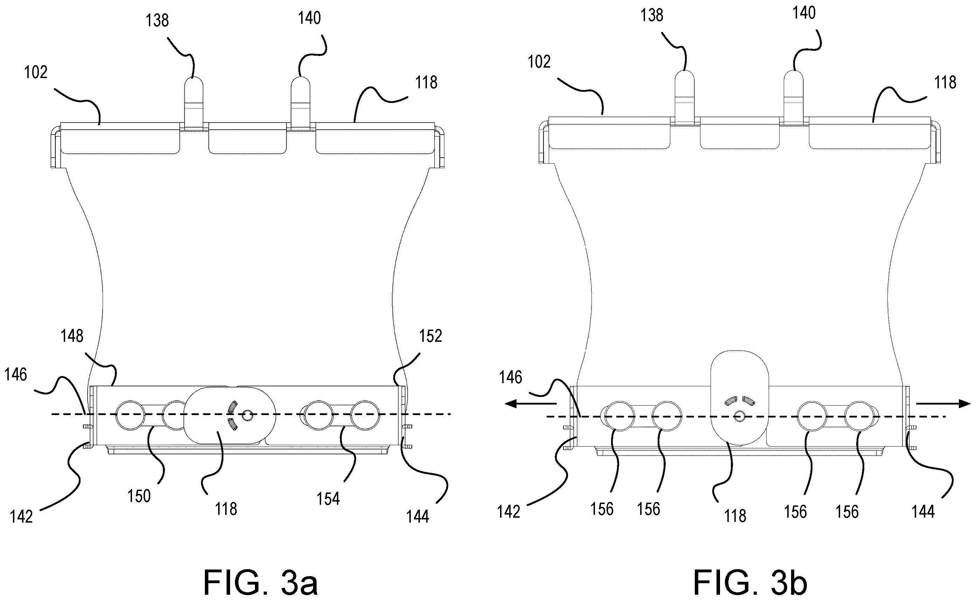

The locking arm 118 as shown in figure 2a and 2b is a component of the rail locking mechanism 172. The locking arm 118 is also shown in figures 3a and 3b. Figures 3a and 3b will now be discussed in more detail. Figure 3a and 3b respectively show a back view of the hanger accessory 100 in an unlocked position and a locked position. Accordingly, in figure 3a, the locking arm 118 is in the unlocked position and the locking arm 118 is in the locked position as shown in figure 3b. In order to move the locking arm 118 from the unlocked position to the locked position, the user rotates the locking mechanism actuator 116 a quarter turn about the locking arm rotation axis 120.

As mentioned above, the locking mechanism actuator 116 actuates both the rail locking mechanism 172 and the pegboard locking mechanism 174 at the same time. Accordingly, the locking arm 118 moves as shown in figures 3a and 3b, whilst also actuating the pegboard locking mechanism 174.

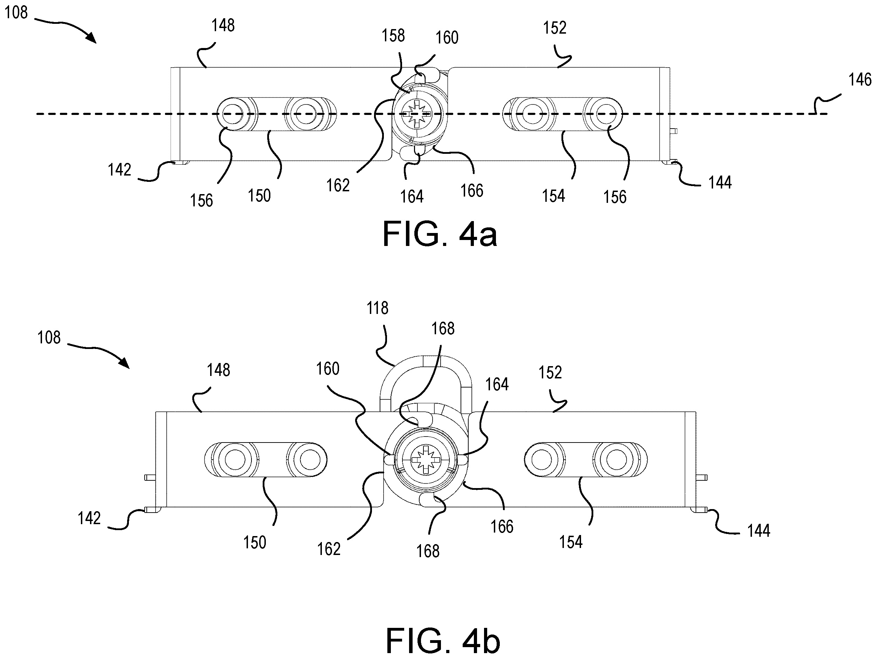

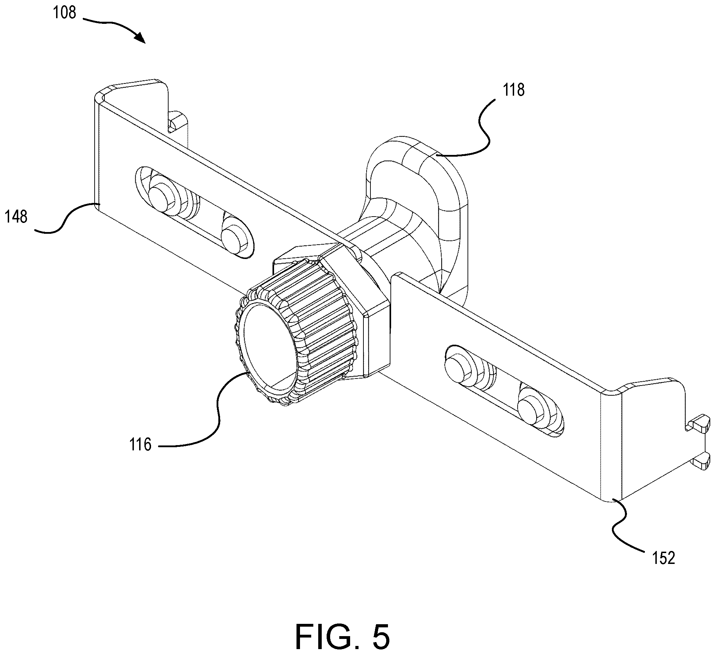

However, the pegboard locking mechanism 174 will also be discussed in more detail with reference to figures 3a, 3b, 4a, 4b and 5. Figure 4a and 4b respectively show a front view of the locking mechanism 108 for the hanger accessory 100 in the unlocked position and the locked position. Figure 5 shows a perspective view of the locking mechanism 108 for the hanger accessory 100. As mentioned above, the locking mechanism 108 as shown in figures 4a, 4b, 5 is both the rail locking mechanism 172 and the pegboard locking mechanism 174.

The pegboard locking mechanism 174 comprises a first locking hook 142 and a second locking hook 144 for selectively engaging two of the second pegboard holes 186. The first locking hook 142 and the second locking hook 144 are moveable with respect to each other. Specifically, the first locking hook 142 and the second locking hook 144 are slidable in a direction along the locking hook sliding axis 146. The locking hook sliding axis 146 extends in a direction parallel to the plane of the accessory body 114.

The first locking hook 142 and the second locking hook 144 are in the unlocked position as shown in figure 4a. In contrast, the first locking hook 142 and the second locking hook 144 are in the locked position as shown in figure 4b. The first locking hook 142 and the second locking hook 144 comprise projecting portions which engage the second pegboard holes 186 and prevent removal of the pegboard locking mechanism 174 from the pegboard 104.

The movement of the first locking hook 142 and the second locking hook 144 is defined by a pair of sliding brackets 148, 152. The pegboard locking mechanism 174 comprises a first sliding bracket 148 and a second sliding bracket 152, which are slidable in a direction parallel with the locking hook sliding axis 146.

The first locking hook 142 is mounted to the first sliding bracket 148 and the second locking hook 144 is mounted to the second sliding bracket 152. The first sliding bracket 148 comprises a first bracket slot 150. Likewise, the second sliding bracket 152 comprises a second bracket slot 154.

A plurality of retaining rivets 156 are positioned within the first bracket slot 150 and the second bracket slot 154. The retaining rivets 156 limit the movement of the first sliding bracket 148 and the second sliding bracket 152 along the locking hook sliding axis 146. The retaining rivets 156 also attach the first sliding bracket 148 and the second sliding bracket 152 to the accessory body 114.

As mentioned above, the locking mechanism actuator 116 causes the first sliding bracket 148 and the second sliding bracket 152 to move between the unlocked position in figure 4a and the locked position in figure 4b. This is achieved by a first cam arm 160 which engages a first cam surface 162 and a second cam arm 164 which engages a second cam surface 166. The first cam surface 162 is positioned on the first sliding bracket 148 and the second cam surface 166 is positioned on the second sliding bracket 152. As can be seen from figures 4a and 4b, a quarter turn of the locking mechanism actuator 116 causes the first cam arm 160 and the second cam arm 164 to respectively engage the first cam surface 162 and the second cam surface 166 and push the first sliding bracket 148 and the second sliding bracket 152 in a direction along the locking hook sliding axis 146 away from the locking mechanism actuator 116. The first cam arm 160 and the second cam arm 164 are coupled to the locking arm 118 and the locking mechansim actuator 116 via a locking fastener 158. The locking fastener 158 may a a screw or other suitable fastener to fix the locking mechanism actuator 116 to the locking arm 118. In this way, when the locking mechanism actuator 116 moves, so does the locking arm 118 and the first cam arm 160 and the second cam arm 164.

The first cam surface 162 comprises a cam stop surface 168. Likewise, the second cam surface 166 comprises another cam stop surface 168. The cam stop surfaces 168 engage the first cam arm 160 and the second cam arm 164 when the locking mechanism 108 is in the unlocked position. Accordingly, the cam stop surface 168 limits the movement of the locking mechanism actuator 116. Similarly, the first bracket slot 150 and the second bracket slot 154 also limit the movement of the locking mechanism 108 between the unlocked position and the locked position since the retaining rivets 156 engage the end of the first bracket slot 150 and the second bracket slot 154 when in the unlocked and locked positions.

The locking arm 118 is visible in figure 4b, but is not visible in figure 4a. Accordingly, as shown in figures 4a and 4b, the locking mechanism actuator 116 actuates both the rail locking mechanism 172 and the pegboard locking mechanism 174 at the same time.

Figure 3b shows the direction in which the first sliding bracket 148 and the second sliding bracket 152 move when in the locked position. Accordingly, the first locking hook 142 and the second locking hook 144 urge against the perimeter of the second pegboard holes 186 when in the locked position.

Whilst the locking mechanism 108, as shown in the figures, has a first locking hook 142 and a second locking hook 144, in other examples there can be a single moving locking hook. For example, in an alternative example, a single first locking hook 142 moves between an unlocked and a locked position. For example, the first locking hook 142 moves in a direction towards and away from the fixed hooks e.g. the first bracket hook 138 and the second bracket hook 140. This means that the single locking hook slides along the locking hook sliding axis 146 in a direction which is perpendicular to that shown in Figure 4a. The locking hook sliding axis 146 can be in any suitable direction, e.g. can be perpendicular to or inclined to the locking hook sliding axis 146 as shown in figure 3b.

Likewise, whilst the hanger accessory 100 shows a plurality of hooks fixed with respect to the accessory body 114 when in the pegboard hanger configuration, e.g. the first bracket hook 138 and the second bracket hook 140, in other examples there can be any number of hooks for engaging the pegboard 104, that is hooks which are fixed with respect to the accessory body 114. Indeed, in some examples there may be a single hook fixed with respect to the accessory body 114. In some preferable examples, there are at least two fixed hooks e.g. the first bracket hook 138 and the second bracket hook 140 to prevent the hanger accessory 100 twisting when mounted on the pegboard 104. Similarly, in some preferred examples there are at least two locking hooks e.g. the first locking hook 142 and the second locking hook 144, again to prevent twisting of the hanger accessory 100 when mounted on the pegboard 104.

In some examples which are not shown in figures 1 to 5, the locking mechanism 108 can be spring biased. Indeed, the locking mechanism 108 can be spring biased to the unlocked position or the locked position. For example, the first sliding bracket 148 and the second sliding bracket 152 can be connected via a spring. The spring can either urge the first sliding bracket 148 and the second sliding bracket 152 away from each other or towards each other depending on the type of spring. This can cause the first sliding bracket 148 and the second sliding bracket 152 to be biased towards either the unlocked position or the locked position. Alternative spring types can be used, e.g. a coil spring mounted along the locking arm rotation axis 120 and connected to the locking mechanism actuator 116 can be used instead. In some other examples, there is no spring and the locking mechanism 108 is not biased to the locked position or the unlocked position. Instead, the user simply moves the locking mechanism actuator 116 to control the actuation status of the locking mechanism 108.

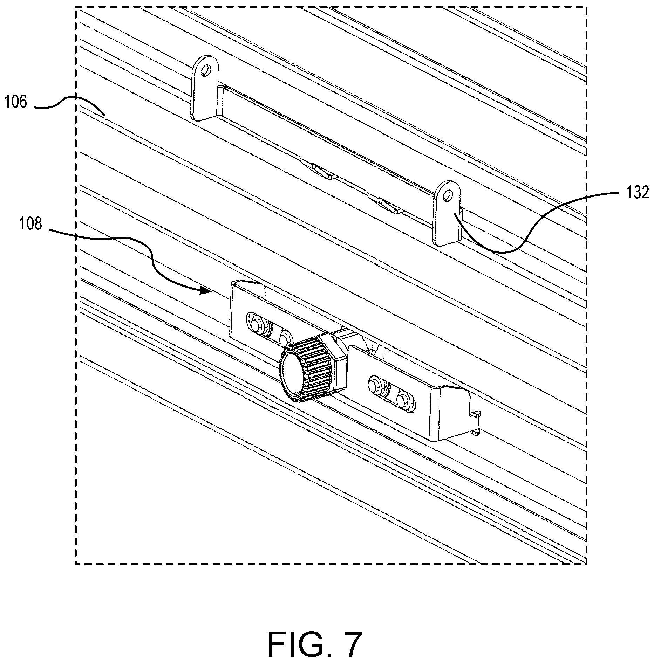

Reference will now be made to figures 6, 7, 8a and 8b where the hanger accessory 100 is in the rail hanger configuration. Figure 6 shows a perspective view of the hanger accessory 100 mounted on the rail 106. Figure 7 shows a perspective view of some of the components of the hanger accessory 100 when mounted on the rail 106. Figures 8a and 8b respectively show a side view of the hanger accessory 100 in the rail hanger configuration in an unlocked position and a locked position.

Figure 6 shows the hanger accessory 100 mounted on the rail 106. The rail 106 extends along a rail longitudinal axis 112 and comprises a rail profile 124. The rail profile 124 comprises a plurality of lips and recesses for accommodating the hanger accessory 100 when mounted thereto. In particular, the rail profile 124 comprises a first rail lip 126 and a second rail lip 130. The first rail lip 126 is positioned above the second rail lip 130. A rail central recess 128 is positioned between the first rail lip 126 and the second rail lip 130. The first rail lip 126 comprises a rail upper recess 178. Likewise, the second rail lip 130 comprises a rail lower recess 180. The first rail lip 126 and the second rail lip 130 respectively extend away from the rail central recess 128. The first rail lip 126, the second rail lip 130 and the rail central recess 128 extend along the length of the rail 106 in the direction of the rail longitudinal axis 112. Indeed, all the recesses, lips and other features in the rail profile 124 extend along the entire length of the rail 106.

The hanger accessory 100 comprises a rail bracket 122 for engaging with the first rail lip 126 or another portion of the rail 106. As shown in figure 8a, the rail bracket 122 overhangs the first rail lip 126. Accordingly, the user can hang the hanger accessory 100 on the first rail lip 126 with just the rail bracket 122. However, the rail locking mechanism 172 needs to be in the locked position in order for the hanger accessory 100 to be secured to the rail 106.

Figure 8b shows the rail locking mechanism 172 in the locked position. Accordingly, the locking arm 118 is also in the locked position and engages the second rail lip 130. This means that the hanger accessory 100 cannot be removed from the rail 106 when the rail locking mechanism 172 is in the locked position. Since the hanger accessory 100 is in the rail hanger configuration, the hook bracket 132 has been pivoted and is received within the rail central recess 128. Furthermore, the rail lower recess 180 is sufficiently deep to accommodate the first locking hook 142 and second locking hook 144 without interfering with the rail 106. This means that the pegboard locking mechanism 174 does not interfere with the locking procedure of the rail locking mechanism 172 against the rail 106.

The respective dimensions of the rail locking mechanism 172 and the pegboard locking mechanism 174 are also shown in figure 2b. Here, the locking arm 118 protrudes a first distance 182 from the accessory body 114. The pegboard locking mechanism 174, e.g. the first locking hook 142 and the second locking hook 144, protrude a second distance 184 from the accessory body 114. The first distance 182 is less than the second distance 184. Accordingly, the locking arm 118 does not protrude beyond the first locking hook 142 the second locking hook 144 and prevent the first locking hook 142 and the second locking hook 144 from projecting through the second pegboard holes 186 and locking the hanger accessory 100 to the pegboard 104.

Figure 1a and 1b show the pivotable hook bracket 132 mounted within the rail bracket 122 in order to permit the first bracket hook 138 and the second bracket hook 140 to project and engage the pegboard 104 when the hanging accessory 100 is in the pegboard hanging configuration. The rail bracket 122 comprises a plurality of hook slots 176 for allowing pivotal movement of the first bracket hook 138 and the second bracket hook 140 past the rail bracket 122 as the hook bracket 132 pivots between the extended position and the stowed position.

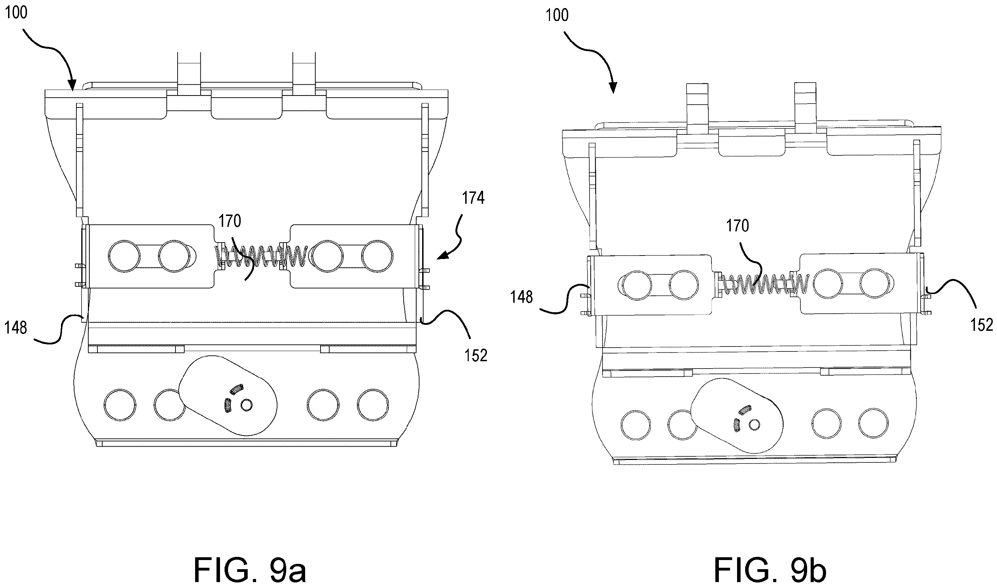

Another example will now be discussed with reference to figures 9a, 9b, 10a and 10b. Figures 9a and 9b respectively show a back view of an alternative hanger accessory 100 in a pegboard hanger configuration in an unlocked position and a locked position. Figures 10a and 10b respectively show a side view of another hanger accessory 100 in a pegboard hanger configuration and a rail hanger configuration.

The hanger accessory 100 as shown in figures 9a, 9b, 10a, 10b is the same as shown in the previous figures and examples discussed therewith. However, the alternative hanger accessory 100 as shown in figures 9a, 9b, 10a, 10b has a locking mechanism actuator 116 that only actuates the rail locking mechanism 172.

Alternatively, the pegboard locking mechanism 174 is separately actuated from the rail locking mechanism 172. Indeed, the first sliding bracket 148 and the second sliding bracket 152 are connected together via a spring 170. The spring 170 urges the first sliding bracket 148 and the second sliding bracket 152 into the locked position as shown in figure 9a.

In order for the user to move the pegboard locking mechanism 174 from the locked position to the unlocked position, the user squeezes the first sliding bracket 148 and the second sliding bracket 152 together. As seen in figures 9a and 9b, the position of the locking arm 118 and the rail locking mechanism 172 is independent of the position of the pegboard locking mechanism 174.

Figure 10a shows the hanger accessory 100 mounted to the pegboard 104 with the pegboard locking mechanism 174 engaged with the pegboard holes 110. The function of the pegboard locking mechanism 174 is the same as previously discussed except that the pegboard locking mechanism 174 is actuated in a different way. As can be seen from figure 10a the locking arm 118 does not project from the accessory body 114 as far as the first locking hook 142 and the second locking hook 144 accordingly the locking arm 118 does not touch the pegboard 104 when the hanger accessory 100 is in the pegboard hanger configuration and mounted to the pegboard 104. Figure 10b shows the hanger accessory 100 in the rail hanger configuration and mounted to the rail 106. Similar to the previous examples the rail bracket 122 engages the first rail lip 126. Likewise, the rail locking mechanism 172 and the locking arm 118 engage the second rail lip 130. The pegboard locking mechanism 174 and the first locking hook 142 and the second locking hook 144 are received within the rail central recess 128 of the rail 106. Accordingly, the pegboard locking mechanism 174 does not touch the rail 106 and interfere with the mounting of the hanger accessory 100 on the rail 106.

In contrast to the previous examples, the first bracket hook 138 and the second bracket hook 140 are not pivotable with respect to the accessory body 114. Instead, the first bracket hook 138 and the second bracket hook 140 are fixed with respect to the rail bracket 122. Indeed, the first bracket hook 138 and the second bracket hook 140 project from the surface of the rail bracket 122. The first bracket hook 138 and the second bracket hook 140 are received in the rail upper recess 178, as shown in figure 10b when the hanger accessory 100 is mounted to the rail 106.

In another example, two or more examples are combined. Features of one example can be combined with features of other examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A hanger accessory (100) mountable on a rail (106) and a pegboard (104) comprising:
an accessory body (114);
a rail bracket (122) connected to the accessory body (114) and mountable on the rail (106) on a first rail portion;
at least one hook (138, 140) connected to the accessory body (114) and engageable with a first pegboard hole (110) of the pegboard (104): and
a locking mechanism (108) mounted on the accessory body (114), wherein the locking mechanism (108) has a rail locking mechanism (172) arranged to selectively engage to a second rail portion of the rail and a pegboard locking mechanism (174) arranged to selectively engage one or more second pegboard holes (186) of the pegboard (104);
wherein the hanger accessory (100) is configurable between a rail hanger configuration wherein the rail bracket (122) and the rail locking mechanism (172) are engageable on the rail (106) and a pegboard hanger configuration wherein the at least one hook (138, 140) and the pegboard locking mechanism (174) are engageable on the pegboard (104).

2. The hanger accessory (100) according to claim 1 wherein the locking mechanism (108) comprises a locking mechanism actuator (116) arranged to actuate the locking mechanism (108).

3. The hanger accessory (100) according to claim 2 wherein the locking mechanism actuator (116) is operatively coupled to the rail locking mechanism (172) and the pegboard locking mechanism (174).

4. The hanger accessory (100) according to claims 2 or 3 wherein the locking mechanism actuator (116) actuates both the rail locking mechanism (172) and the pegboard locking mechanism (174) at the same time.

5. The hanger accessory (100) according to any of claims 1 to 4 wherein the pegboard locking mechanism (174) comprises at least one locking hook (142, 144) wherein the at least one locking hook (142, 144) is moveable between a locked position and an unlocked position.

6. The hanger accessory (100) according to claim 5 when dependent on any of claims 2 to 4 wherein the at least one locking hook (142, 144) is mounted on a moveable bracket (148, 152) having at least one cam surface (162, 166) and the locking mechanism actuator (116) comprises at least one cam arm (160, 164) engageable with the at least one cam surface (162, 166) arranged to move the moveable bracket (148, 152) between the locked position and the unlocked position.

7. The hanger accessory (100) according 6 wherein the moveable bracket (148, 152) comprises at least one bracket slot (150, 154) wherein at least one retaining rivet (156) fixed to the accessory body (114) is positioned within the at least one bracket slot (150, 154).

8. The hanger accessory (100) according to claims 5 or 7 wherein the at least one locking hook (142, 144) is a first locking hook (142) and a second locking hook (144) which are moveable between the locked position and the unlocked position.

9. The hanger accessory (100) according to any of claims 5 to 8 wherein the locking mechanism (108) comprises a spring (170) connected to the at least one locking hook (142, 144) such that the at least one locking hook (142, 144) is biased to the unlocked position or the locked position.

10. The hanger accessory (100) according to any of the preceding claims wherein the at least one hook (142, 144) is mounted to a pivotable hook bracket (132) moveable between an extended position and a stowed position.

11. The hanger accessory (100) according to claim 10 wherein when the pivotable hook bracket (132) is in the stowed position, the pivotable hook bracket (132) is positioned between the rail bracket (122) and the rail locking mechanism (172) such that the pivotable hook bracket (132) is receivable in a rail central recess (128) between the first rail portion and the second rail portion.

12. The hanger accessory (100) according to any of claims 10 or 11 wherein the rail bracket (122) comprises at least one hook slot (176) for receiving the at least one hook (138, 140) when the pivotable hook bracket (132) moves between the extended position and the stowed position.

13. The hanger accessory (100) according to any of the preceding claims wherein the rail locking mechanism (172) comprises a rotatable locking arm (118) moveable between a locked position wherein the locking arm (118) engages the second rail portion and an unlocked position wherein the locking arm (118) disengages from the second rail portion.

14. The hanger accessory (100) according to claim 14 wherein the rotatable locking arm (118) protrudes a first distance (182) from the accessory body (114) and the pegboard locking mechanism (174) protrudes a second distance (184) from the accessory body (114) and the first distance (182) is less than the second distance (184).

15. The hanger accessory (100) according to any of the preceding claims wherein at least a portion of the pegboard locking mechanism (174) is receivable in a recess in the rail (106) when the hanger accessory (100) is in the rail hanger configuration.

16. A hanger system (102) comprising:
a hanger accessory (100) according to any of the claims 1 to 15; and
a rail (106) and / or a pegboard (104).
